# EUROPEAN PATENT APPLICATION

(11) **EP 4 664 954 A1**
(43) Date of publication of application: **17.12.2025**
(21) Application number: 23920556.0
(22) Date of filing: 10.02.2023
(51) Int. Cl.: H04W 12/03

(54) **SIDELINK COMMUNICATION METHOD AND DEVICE**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Stöckeler, Ferdinand
(86) International application number: PCT/CN2023/075543
(87) International publication number: WO 2024/164349

(57) **Abstract**

The present disclosure relates to the field of communications, and provides a sidelink communication method and device. The method comprises: receiving a direct communication request, wherein the direct communication request comprises a Layer 2 identifier and encrypted information for sidelink communication; according to the Layer 2 identifier, determining a security key used for decrypting the encrypted information; and using the security key to decrypt the encrypted information to facilitate sidelink communication. Therefore, secure sidelink communication can be achieved.

## Description

### TECHNICAL FIELD

The disclosure relates to the field of mobile communication technology, and in particular to a method and an apparatus for sidelink (SL) communication.

### BACKGROUND

In sidelink (SL) communication, a remote user equipment (UE) encrypts information for performing the SL communication in a direct communication request (DCR) using security parameters used for a discovery procedure, and sends the DCR to a UE-to-network relay device. After receiving the DCR, the relay device needs to decrypt the information for the SL communication using corresponding security parameters. However, how the relay device obtains the corresponding security parameters for decryption is unclear in existing technical specifications.

### SUMMARY

The disclosure provides a method and an apparatus for SL communication. After receiving a DCR, a UE determines a security key for decrypting encrypted information in the DCR based on a destination layer 2 identification (ID) in the DCR, which helps achieve secure SL communication.

A first aspect of the disclosure provides a method for sidelink (SL) communication. The method is performed by a UE, including: receiving a DCR, in which the DCR includes a destination layer 2 ID and encrypted information for the SL communication; determining a security key for decrypting the encrypted information based on the destination layer 2 ID; and decrypting the encrypted information using the security key for performing the SL communication.

Optionally, determining the security key for decrypting the encrypted information based on the destination layer 2 ID includes: determining, based on the destination layer 2 ID, a security context matching the destination layer 2 ID from one or more pre-stored security contexts; and determining the security key based on the matched security context.

Optionally, each security context includes: a service code for identifying a service type of the SL communication, a layer 2 ID corresponding to the service code, and a security key associated with the service code.

Optionally, the service code includes any one of: a relay service code (RSC); a proximity based service (ProSe) restricted code; a ProSe query code; a ProSe response code; or a ranging service code.

Optionally, each security context further includes any one or more of: a UE-to-network (U2N) relay layer indicator; or a control plane security indicator.

Optionally, the method further includes: creating and storing a security context based on a layer 2 ID, a service code, and a security key which are determined during a discovery procedure.

Optionally, creating and storing the security context includes any one of: creating and storing the security context when determining the layer 2 ID for the discovery procedure; creating and storing the security context after sending a discovery message for the discovery procedure; or creating and storing the security context after completing the discovery procedure.

A second aspect of the disclosure provides an apparatus for SL communication. The apparatus is configured in a UE, including: a transceiver module, configured to receive a direct communication request (DCR), in which the DCR includes a destination layer 2 identification (ID) and encrypted information for the SL communication; and a processing module, configured to determine a security key for decrypting the encrypted information based on the destination layer 2 ID; and decrypt the encrypted information using the security key for performing the SL communication.

Optionally, the processing module is configured to: determine, based on the destination layer 2 ID, a security context matching the destination layer 2 ID from one or more pre-stored security contexts; and determine the security key based on the matched security context.

Optionally, each security context includes: a service code for identifying a service type of the SL communication, a layer 2 ID corresponding to the service code, and a security key associated with the service code.

Optionally, the service code includes any one of: a RSC; a ProSe restricted code; a ProSe query code; a ProSe response code; or a ranging service code.

Optionally, each security context further includes any one or more of: a U2N relay layer indicator; or a control plane security indicator.

Optionally, the processing module is further configured to: create and store a security context based on a layer 2 ID, a service code, and a security key which are determined during a discovery procedure.

Optionally, the processing module is configured to perform any one of: creating and storing the security context when determining the layer 2 ID for the discovery procedure; creating and storing the security context after sending a discovery message for the discovery procedure; or creating and storing the security context after completing the discovery procedure.

A third aspect of the disclosure provides a communication device. The communication device includes: a transceiver; a memory; a processor connected to both the transceiver and the memory, configured to control wireless signal transmission/reception of the transceiver by executing computer-executable instructions stored in the memory, and enable the method according to the first aspect to be implemented.

A fourth aspect of the disclosure provides a computer storage medium. The computer storage medium stores computer-executable instructions, when the computer-executable instructions are executed by a processor, the method according to the first aspect is implemented.

Embodiments of the disclosure provide a method and an apparatus for SL communication. The UE receives the DCR, in which the DCR includes a destination layer 2 ID and the encrypted information for the SL communication, determines a security key based on the destination layer 2 ID, and decrypts the encrypted information using the security key for performing the SL communication, which helps achieve secure SL communication.

Additional aspects and advantages of the disclosure will be set forth in part in the description which follows, and in part will be obvious from the description, or will be learned by practice of the disclosure.

### BRIEF DESCRIPTION OF THE DRAWINGS

The above-mentioned and/or additional aspects and advantages of the disclosure will become apparent and readily appreciated from the following description of embodiments, taken in combination with the accompanying figures.
FIG. 1 is a block diagram illustrating a communication system according to an embodiment of the disclosure.
FIG. 2 is a flow chart illustrating a method for sidelink (SL) communication according to an embodiment of the disclosure.
FIG. 3 is a flow chart illustrating a method for SL communication according to an embodiment of the disclosure.
FIG. 4 is a flow chart illustrating a method for SL communication according to an embodiment of the disclosure.
FIG. 5 is a flow chart illustrating a Mode A discovery procedure according to an embodiment of the disclosure.
FIG. 6 is a flow chart illustrating a Mode B discovery procedure according to an embodiment of the disclosure.
FIG. 7 is a block diagram illustrating an apparatus for SL communication according to an embodiment of the disclosure.
FIG. 8 is a block diagram illustrating a communication device according to an embodiment of the disclosure.
FIG. 9 is a block diagram illustrating a chip according to an embodiment of the disclosure.

### DETAILED DESCRIPTION

Embodiments of the disclosure are described in detail below, and examples of the embodiments are illustrated in the accompanying figures. Throughout the drawings, the same or similar reference numerals denote the same or similar components or components with the same or similar functions. The embodiments described below by reference to the accompanying figures are exemplary and are intended to explain the disclosure, but should not be construed as a limitation of the disclosure.

Terms used in the embodiments of the disclosure are for the purpose of describing specific embodiments only, and are not intended to limit the embodiments of the disclosure. As used in the examples of this disclosure and the appended claims, the singular forms "a/an" and "the" are also intended to include the plural forms unless the context clearly indicates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used herein may be interpreted as "in the case that" or "when" or "in response to determining".

For ease of understanding, descriptions of some terms related to embodiments of the disclosure are provided below.

### Sidelink (SL)

The long term evolution (LTE) systems have supported SL since Release 12, which may also be referred to as side-link or peer-to-peer link. The SL enables direct data transmission between UEs without relying on network devices.

The LTE SL design may apply to specific public safety scenarios (e.g., emergency communication at disaster sites such as fires or earthquakes) or vehicle-to-everything (V2X) communication. The V2X communication includes various services such as basic safety communication, autonomous driving, platooning, sensor extension, and the like. Since the LTE SL supports only broadcast communication, it is primarily used for basic safety communication. Advanced V2X services with strict quality of service (QoS) requirements in latency and reliability are supported by the new radio (NR) SL.

### 5G Proximity Service (ProSe)

The ProSe refers to the SL communication between device-to-device or mobile devices in proximity. Via UE-to-UE relaying, the 5G ProSe further extends the coverage of the SL communication.

### UE-to-Network (U2N) relay

The U2N relay mode allows a UE to access the network by connecting to another relay UE, regardless of whether the UE is within the coverage.

### Ranging

Ranging may be used to determine a distance and/or a direction and/or a relative position between two or more UEs.

To facilitate understanding of the method and the apparatus for SL communication provided in the embodiments of the disclosure, a communication system applicable to the embodiments is first described below.

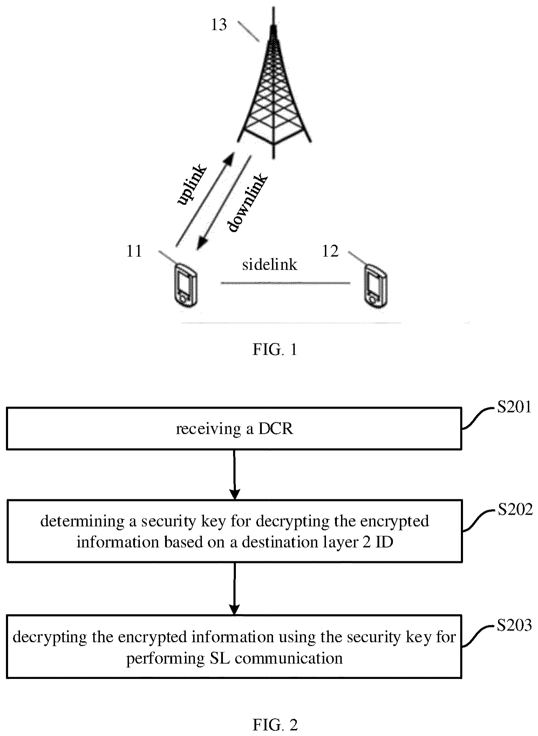

FIG. 1 is a block diagram illustrating a communication system according to an embodiment of the disclosure. The wireless communication system includes a first UE 11, a second UE 12, and a network device 13. A link for communication between the network device and UEs is an uplink/downlink, and a link between the first UE and the second UE is the SL.

It should be understood that the wireless communication system in FIG. 1 is only for schematic illustration, and the wireless communication system may also include other network devices, such as a core network device, a wireless relay device, and a wireless backhaul device, which are not illustrated in FIG. 1. The number of network devices and the number of terminals in the wireless communication system are not limited in the embodiments of the disclosure.

It should be further understood that the wireless communication system according to the embodiments of the disclosure is a network that provides a wireless communication function. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), or carrier sense multiple access with collision avoidance. The networks, according to capacities, speeds, delays, and other factors of different networks, may be divided into a second generation (2G) network, a third generation (3G) network, a fourth generation (4G) network, or a future evolution network, such as a fifth generation (5G) network, which may also be called a NR network. For convenience of descriptions, the wireless communication network may be referred simply as a network sometimes in the disclosure.

Further, the network device involved in the disclosure may also be referred to as a wireless access network device. The wireless access network device may be a base station, an evolved node B (eNB), a home base station, an access point (AP) in a wireless fidelity (WiFi) system, a wireless relay node, a wireless backhaul node, a transmission point (TP), a transmission and reception point (TRP), or the like; may also be a next generation base station (gNB) in an NR system; and may also be a component or a part of device that constitutes a base station. When it is a V2X communication system, the network device may also be a vehicle-mounted device. It should be understood that the specific technology and specific device form adopted by the network device are not limited in embodiments of the disclosure.

Further, the UE according to the disclosure may also be referred to as a terminal device, a terminal, a mobile station (MS), a mobile terminal (MT), or the like. The terminal may be a device providing voice and/or data connectivity for a user. For example, the terminal may be a handheld device with a wireless connection function, a vehicle-mounted device, or the like. Currently, some examples of the terminal are: mobile phones, pocket personal computers (PPCs), palmtop computers, personal digital assistants (PDAs), laptops, tablets, wearable devices, vehicle-mounted devices, or the like. In addition, when it is a V2X communication system, the terminal device may also be a vehicle-mounted device. It should be understood that the specific technology and specific device form adopted by the terminal are not limited in the embodiments of the disclosure.

It may be understood that the communication system described in the embodiments of the disclosure is intended to explain technical solutions of the embodiments of the disclosure more clearly, and does not constitute a limitation to the technical solutions provided by the embodiments of the disclosure. Those skilled in the art know that, with evolution of a system architecture and emergence of a new service scenario, the technical solutions provided in the embodiments of the disclosure are equally applied to similar technical problems.

Currently, in the SL communication, a 5G ProSe remote UE encrypts, using code-receiving security parameters used for a discovery procedure, information in a direct communication request (DCR), such as user plane prose remote user key (UP-PRUK ID), control plane prose remote user key (CP-PRUK ID), and a service code (which identifies a service type of the SL communication). After receiving the DCR, a 5G ProSe U2N relay device uses code-sending security parameters used for the discovery procedure to decrypt the encrypted information.

To decrypt the encrypted information in the DCR, the code-sending security parameters associated with the service code are required. However, since the service code is encrypted, the relay device cannot obtain the corresponding code-sending security parameters. Thus, how to decrypt the encrypted information in the DCR becomes an urgent problem to solve.

To address the problem, the disclosure provides a method and an apparatus for SL communication. After receiving the DCR, the UE may determine a security key for decrypting the encrypted information in the DCR based on a layer 2 identification (ID) in the DCR, which helps achieve secure SL communication.

It should be noted that in the disclosure, the code-sending security parameters, the code-receiving security parameters, and code security parameters include security keys for encryption and decryption.

The method and apparatus for SL communication provided in the disclosure are described in detail below with reference to the accompanying drawings.

FIG. 2 is a flow chart illustrating a method for SL communication according to an embodiment of the disclosure. As shown in FIG. 2, the method may be performed by a UE and may include the following steps S201 to S203.

At S201, a DCR is received.

The DCR includes a destination layer 2 ID and encrypted information for the SL communication.

In the SL communication, a remote UE sends a DCR to a relay UE to request establishment of a PC5 link for the SL communication between the remote UE and the relay UE. The remote UE sends the DCR to the relay UE using a layer 2 ID of the remote UE as a source layer 2 ID and a layer 2 ID of the relay UE as the destination layer 2 ID. In addition to the layer 2 ID, the DCR includes the encrypted information for the SL communication to ensure secure SL communication.

At S202, a security key for decrypting the encrypted information is determined based on the destination layer 2 ID.

After receiving the DCR, the UE may determine the security key for decrypting the encrypted information in the DCR based on the destination layer 2 ID included in the DCR.

At S203, the encrypted information is decrypted using the security key for performing SL communication.

After determining the security key, the UE may decrypt the encrypted information in the DCR using the security key to obtain information for the SL communication, thus achieving the SL communication.

According to the method for SL communication in embodiments of the disclosure, the UE receives the DCR, in which the DCR includes the destination layer 2 ID and the encrypted information for the SL communication. The UE determines the security key based on the destination layer 2 ID and decrypts the encrypted information using the security key for performing the SL communication, which helps achieve the secure SL communication.

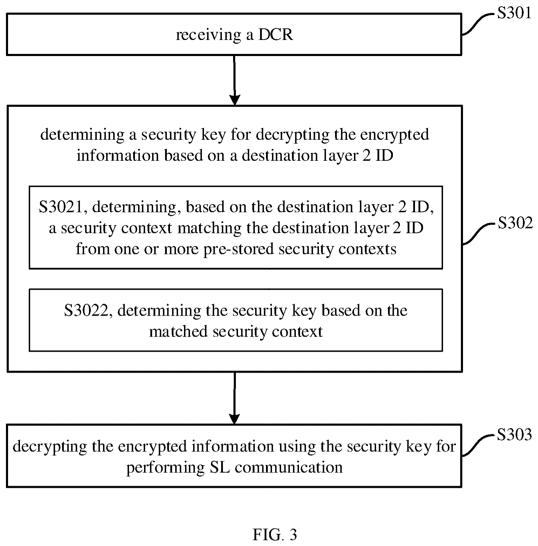

FIG. 3 is a flow chart illustrating a method for SL communication according to an embodiment of the disclosure. As shown in FIG. 3, the method may be performed by a UE and may include the following steps S301 to S303.

At S301, a DCR is received.

The DCR includes a destination layer 2 ID and encrypted information for the SL communication.

For a detailed description of step S301 and related details, reference may be made to the description of step S201 and related details, which is not repeated here.

At S302, a security key for decrypting the encrypted information is determined based on the destination layer 2 ID.

In some embodiments, step S302 may include the following steps S3021 to S3022.

At S3021, a security context matching the destination layer 2 ID is determined from one or more pre-stored security contexts based on the destination layer 2 ID.

At least one security context is pre-stored in the UE. After receiving the DCR, the UE may select, based on the destination layer 2 ID, the security context matching the destination layer 2 ID in the DCR from the at least one security context. It should be noted that the security context may also be referred to as a discovery security context or similar, which is not limited in the disclosure.

In some embodiments, each security context includes: a service code for identifying a service type of the SL communication, a layer 2 ID corresponding to the service code, and a security key associated with the service code.

As an example, the UE may store a list of security contexts. The list of security contexts includes three security contexts: Context 1, Context 2, and Context 3. Context 1 includes service code 1, L2-ID1 (layer 2 ID corresponding to service code 1), and key 1 (security key associated with service code 1). Context 2 includes service code 2, L2-ID2 (layer 2 ID corresponding to service code 2), and key 2 (security key associated with service code 2). Context 3 includes service code 3, L2-ID3 (layer 2 ID corresponding to service code 3), and key 3 (security key associated with service code 3). If the destination layer 2 ID in the received DCR is L2-ID2, the UE may determine that Context 2 is the security context matching the destination layer 2 ID.

At S3022, the security key is determined based on the matched security context.

After determining the matched security context, the security key may be determined based on the matched security context.

As in the above example, after determining Context 2 as the matched security context, key 2 included in Context 2 may be used as the security key.

At S303, the encrypted information is decrypted using the security key for performing the SL communication.

For a detailed description of step S303 and related details, reference may be made to the description of step S203 and related details, which is not repeated here.

For example, in a practical application, after receiving the DCR, a 5G ProSe U2N relay decrypts an UP-PRUK ID/CP-PRUK ID and a relay service code (RSC) in the DCR using code-sending security parameters including the security key. The 5G ProSe U2N relay obtains the security key of the code-sending security parameters based on the security context, for example, by retrieving a security context including a layer 2 ID matching the destination layer 2 ID in the DCR.

Further, the 5G ProSe U2N relay verifies whether the RSC matches a RSC sent in the discovery message. If the RSC does not match the RSC sent in the discovery message, the 5G ProSe U2N relay abandons the PC5 direct link communication procedure.

According to the method for SL communication in embodiments of the disclosure, the UE receives the DCR, in which the DCR includes the destination layer 2 ID and the encrypted information for the SL communication. The UE determines the security key based on the destination layer 2 ID and decrypts the encrypted information using the security key for performing the SL communication, which helps achieve the secure SL communication.

In some embodiments, the service code may include any one of: a RSC, a ProSe restricted code, a ProSe query code, a ProSe response code, or a ranging service code.

In some embodiments, each security context may further include one or more of: a U2N relay layer indicator, or a control plane security indicator.

The U2N relay layer indicator indicates whether the associated service code provides a 5G ProSe layer 2 relay service or a 5G ProSe layer 3 relay service.

If a control plane security indicator is provided for the service code, a control plane based security procedure is performed for U2N relay communication corresponding to the service code; otherwise, a user plane based security procedure is performed.

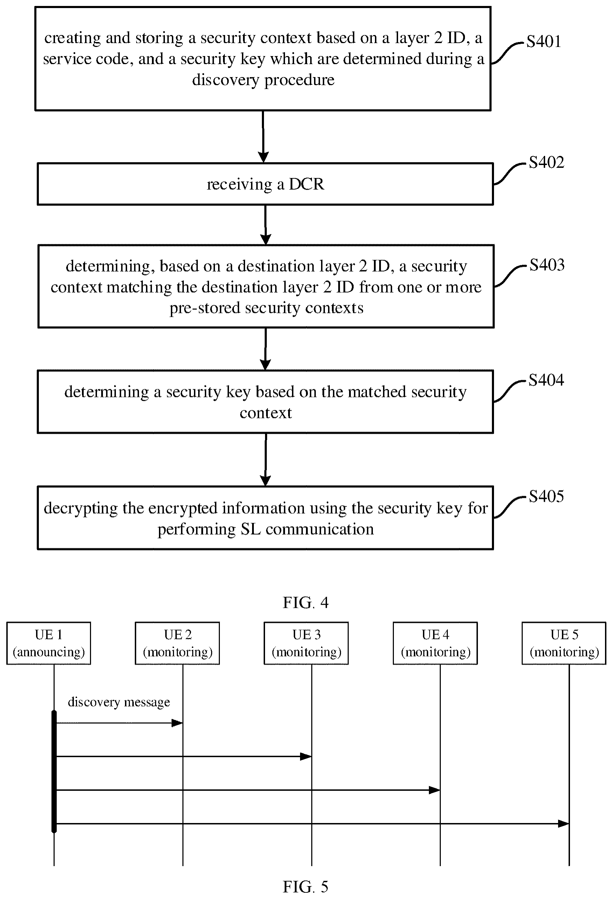

FIG. 4 is a flow chart illustrating a method for SL communication according to an embodiment of the disclosure. As shown in FIG. 4, the method may be performed by a UE and includes the following steps S401 to S405.

At S40 1, a security context is created and stored based on a layer 2 ID, a service code, and a security key which are determined during a discovery procedure.

The UE may create and store the security context including the layer 2 ID, the service code, and the security key based on the layer 2 ID, the service code, and the security key determined during the discovery procedure. It should be noted that the security context may also be referred to as a discovery security context or similar, which is not limited in the disclosure.

In some embodiments, the UE may create and store the security context when determining the layer 2 ID for the discovery procedure.

In other embodiments, the UE may create and store the security context after sending a discovery message for the discovery procedure.

In other embodiments, the UE may create and store the security context after completing the discovery procedure.

Two modes for the discovery procedure are currently defined: Mode A and Mode B.

FIG. 5 is a flow chart illustrating a Mode A discovery procedure according to an embodiment of the disclosure. In Mode A, two types of UEs participate in ProSe direct discovery which are an announcing UE and a monitoring UE. The announcing UE is a UE that announces specific information which may be used by UEs in proximity that have permission to discover. The monitoring UE is a UE that monitors broadcast messages to discover announcing UEs in proximity.

In this model, the announcing UE broadcasts a discovery message, and monitoring UEs in proximity read and process the message.

As shown in FIG. 5, the announcing UE broadcasts the discovery message. The discovery message includes: a type of the discovery message, a service code for identifying a service type of the SL communication (such as a ProSe application code, a ProSe restricted code, or a RSC)), and other metadata. Application layer metadata may be metadata in the discovery message. Content in the discovery message is protected by code discovery security parameters or code security parameters.

To implement the discovery procedure, the announcing UE self-selects a source layer 2 ID for the discovery procedure (such as 5G ProSe direct discovery, 5G ProSe U2N discovery/ranging, or SL positioning discovery), and determines a destination layer 2 ID for the discovery procedure based on network configured information.

As an example, the announcing UE may create and store the security context including the self-selected source layer 2 ID, the service code, and the security key associated with the service code after broadcasting the discovery message.

As another example, the announcing UE may create and store the security context including the self-selected source layer 2 ID, the service code, and the security key associated with the service code after selecting the source layer 2 ID.

As another example, the announcing UE may create and store the security context including the self-selected source layer 2 ID, the service code, and the security key associated with the service code after completing the discovery procedure.

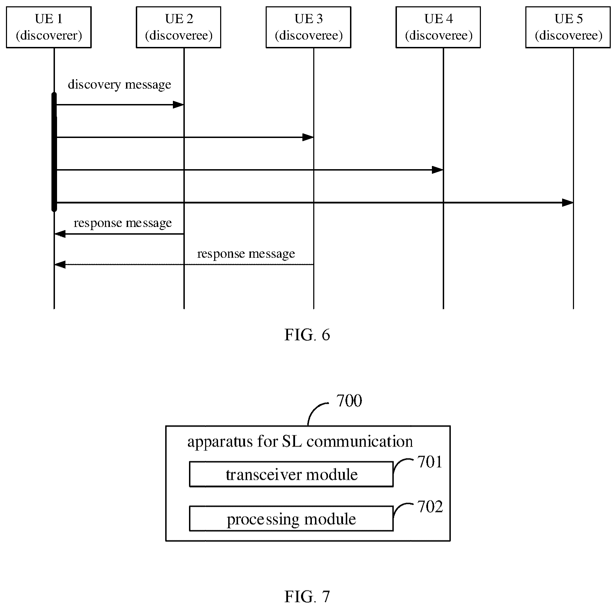

FIG. 6 is a flow chart illustrating a Mode B discovery procedure according to an embodiment of the disclosure. In Mode B, two types of UEs participate in ProSe direct discovery which are a discoverer UE and a discoveree UE. The discoverer UE is a UE that sends a request, the request includes specific information about what the UE is interested in discovering. The discoveree UE is a UE that receives the request and may reply with information related to the request sent by the discoverer UE.

The discoverer UE sends information about other UEs from which the discoverer UE wishes to receive responses. For example, the information may relate to identification information of a UE, a ProSe query code, or a ProSe application identity corresponding to a group whose members may respond.

As shown in FIG. 6, the discoverer UE broadcasts a discovery message. T including: a type of the discovery message, a service code for identifying a service type of the SL communication (such as a ProSe query code or a RSC), and the like. Content in the discovery message is protected by code discovery security parameters or code security parameters.

To implement the discovery procedure, the discoverer UE self-selects a source layer 2 ID for the discovery procedure (such as 5G ProSe direct discovery, 5G ProSe U2N discovery/ranging, or SL positioning discovery), and determines a destination layer 2 ID for the discovery procedure based on network configured information.

As an example, the discoverer UE may create and store the security context including the self-selected source layer 2 ID, the service code, and the security key associated with the service code after broadcasting the discovery message.

As another example, the discoverer UE may create and store the security context including the self-selected source layer 2 ID, the service code, and the security key associated with the service code after selecting the source layer 2 ID.

As another example, the discoverer UE may create and store the security context including the self-selected source layer 2 ID, the service code, and the security key associated with the service code after completing the discovery procedure.

After receiving the discovery message, the discoveree UE matching the discovery message may send a response message to the discoverer UE. The response message may include: a type of the discovery message, a service code for identifying a service type of the SL communication (such as a ProSe response code or a RSC), and metadata. Application layer metadata may be metadata in the discovery message. Content in the discovery message is protected by code-receiving security parameters or code security parameters.

The discoveree UE self-selects a source layer 2 ID for the discovery procedure (such as 5G ProSe direct discovery, 5G ProSe U2N discovery/ranging, or SL positioning discovery), and sets a source layer 2 ID of the received discovery message as the destination layer 2 ID.

As an example, the discoveree UE may create and store the security context including the self-selected source layer 2 ID, the service code, and the security key associated with the service code after sending the response message.

As another example, the discoveree UE may create and store the security context including the self-selected source layer 2 ID, the service code, and the security key associated with the service code after selecting the source layer 2 ID.

As another example, the discoveree UE may create and store the security context including the self-selected source layer 2 ID, the service code, and the security key associated with the service code after completing the discovery procedure.

At S402, a DCR is received.

The DCR includes a destination layer 2 ID and encrypted information for the SL communication.

For a detailed description of step S301 and related details, reference may be made to the description of step S201 and related details, which is not repeated here.

At S403, a security context matching the destination layer 2 ID is determined from one or more pre-stored security contexts based on the destination layer 2 ID.

At S404, the security key is determined based on the matched security context.

At S405, the encrypted information is decrypted using the security key for performing the SL communication.

For detailed descriptions of steps S402 to S405 and related details, reference may be made to the descriptions of steps S301 to S303 and related details, which are not repeated here.

According to the method for SL communication in embodiments of the disclosure, the UE receives the DCR, in which the DCR includes the destination layer 2 ID and the encrypted information for the SL communication. The UE determines the security key based on the destination layer 2 ID and decrypts the encrypted information using the security key for performing the SL communication, which helps achieve the secure SL communication.

In some embodiments, the service code may include any one of: a RSC, a ProSe restricted code, a ProSe query code, a ProSe response code, or a ranging service code.

In some embodiments, each security context may further include one or more of: a U2N relay layer indicator, or a control plane security indicator.

In the above embodiments provided in the disclosure, description is made to the method according to embodiments of the disclosure from the perspective of the UE. In order to realize each of the functions in the method according to the above embodiments of the disclosure, the UE may include a hardware structure, a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Corresponding to the method for SL communication provided in the foregoing embodiments, the disclosure further provides an apparatus for SL communication. Since the apparatus for SL communication provided in the embodiments of the disclosure corresponds to the method for SL communication provided in the foregoing embodiments, the implementation manner of the method for SL communication is also applicable to the apparatus for SL communication provided in this embodiment, which is not described in detail here.

FIG. 7 is a block diagram illustrating an apparatus 700 for SL communication according to an embodiment of the disclosure. The apparatus 700 may be configured in a UE.

As shown in FIG. 7, the apparatus 700 may include a transceiver module 701 and a processing module 702.

The transceiver module 701 is configured to receive a DCR, in which the DCR includes a destination layer 2 ID and encrypted information for the SL communication.

The processing module 702 is configured to determine a security key for decrypting the encrypted information based on the destination layer 2 ID; and decrypt the encrypted information using the security key for performing the SL communication.

According to the apparatus for SL communication in embodiments of the disclosure, the UE receives the DCR, in which the DCR includes the destination layer 2 ID and the encrypted information for the SL communication. The UE determines the security key based on the destination layer 2 ID and decrypts the encrypted information using the security key for performing the SL communication, which helps achieve the secure SL communication.

In some embodiments, the processing module 702 is configured to: determine, based on the destination layer 2 ID, a security context matching the destination layer 2 ID from one or more pre-stored security contexts; and determine the security key based on the matched security context.

In some embodiments, each security context includes: a service code for identifying a service type of the SL communication, a layer 2 ID corresponding to the service code, and a security key associated with the service code.

In some embodiments, the service code includes any one of: a RSC; a ProSe restricted code; a ProSe query code; a ProSe response code; or a ranging service code.

In some embodiments, each security context further includes any one or more of: a U2N relay layer indicator; or a control plane security indicator.

In some embodiments, the processing module 702 is further configured to: create and store the security context based on a layer 2 ID, a service code, and the security key which are determined during a discovery procedure.

In some embodiments, the processing module 702 is configured to perform any one of: creating and storing the security context when determining the layer 2 ID for the discovery procedure; creating and storing the security context after sending a discovery message for the discovery procedure; or creating and storing the security context after completing the discovery procedure.

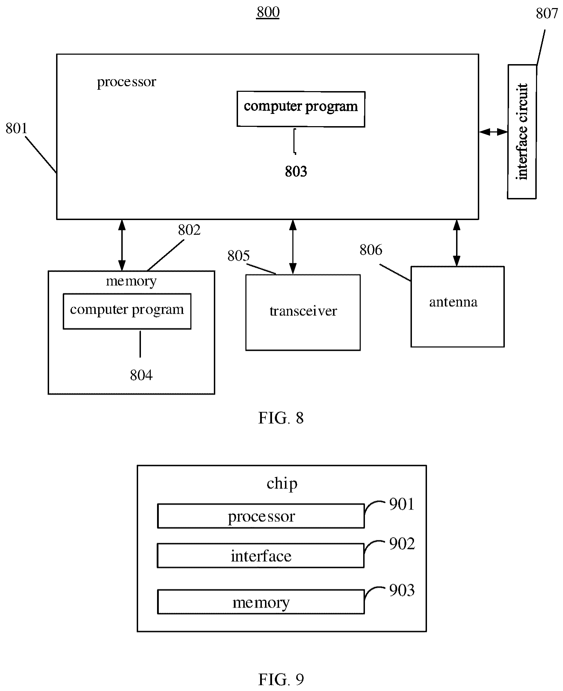

FIG. 8 is a block diagram illustrating a communication device 800 according to an embodiment of the disclosure. The communication device 800 may be UE, a chip, a system on chip or a processor that supports a network device to implement the method, or a chip, a system on chip or a processor that supports the UE to implement the method. The communication device 800 may be configured to implement the method described in the method embodiments, which may refer to descriptions in the method embodiments.

The communication device 800 may include one or more processors 801. The processor 801 may include a general purpose processor or a dedicated processor. For example, the processor may be a baseband processor or a central processor. The baseband processor may be configured to process a communication protocol and communication data, and the central processor may be configured to control a communication device (e.g., a network side device, a baseband chip, a UE, a UE chip, a DU or CU, etc.), to execute a computer program, and process data of the computer program.

Optionally, the communication device 800 may further include one or more memories 802 with a computer program 804 stored. The processor 801 executes the computer program 804 so that the communication device 800 performs the method as described in the above method embodiments. Optionally, the memory 802 may further store data. The communication device 800 and the memory 802 may be independently configured or integrated together.

Optionally, the communication device 800 may further include a transceiver 805 and an antenna 806. The transceiver 805 may be referred to as a transceiving unit, a transceiver or a transceiving circuit, which may be configured to achieve a transceiving function. The transceiver 805 may include a receiver and a transmitter. The receiver may be referred to as a receiving unit or a receiving circuit, etc., for implementing a receiving function; the transmitter may be referred to as a transmitting unit or a transmitting circuit, etc. for implementing a transmitting function.

Optionally, the communication device 800 may further include one or more interface circuits 807. The interface circuit 807 is configured to receive code instructions and transmit the code instructions to the processor 801. The processor 801 runs the code instructions so that the communication device 800 performs the method according to the above method embodiments.

In an implementation, the processor 801 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 801 may be stored with a computer program 803. The computer program 803 is running on the processor 801 so that the communication device 800 performs the method as described in the above method embodiments. The computer program 803 may be solidified in the processor 801, in which case the processor 801 may be implemented by hardware.

In an implementation, the communication device 800 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), and the like.

The communication device described in the above embodiments may be a UE, but the scope of the communication device described in the disclosure is not limited, and a structure of the communication device may not be limited in FIG. 8. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.;
(6) others, and so forth.

In the case that the communication device may be a chip or a system on chip, reference may be made to a block diagram of a chip in FIG. 9. The chip shown in FIG. 9 includes a processor 901 and an interface 902. The number of processors 901 may be one or more, and the number of interfaces 902 may be more than one.

Optionally, the chip further includes a memory 903, configured to store necessary computer program and data.

Those skilled in the related art may understand that various illustrative logical blocks and steps listed in embodiments of the disclosure may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

A readable storage medium with instructions stored is further provided in the disclosure. When the instructions are executed by a computer, the functions of any one of the above method embodiments are implemented.

A computer program product is further provided in the disclosure. When the computer program product is executed by the computer, the functions of any one of the above method embodiments are implemented.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a dedicated computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of embodiments of the disclosure, but also to indicate an order of precedence.

The phase "at least one" in the disclosure may also be described as one or more, and the phase "a plurality of" may refer to two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used in the disclosure, the terms "machine-readable medium" and "computer-readable medium" refer to any computer program product, device, and/or apparatus (e.g., disk, optical disk, memory, programmable logic device (PLD)) that is used to provide machine instructions and/or data to a programmable processor, including a machine-readable medium that receives machine instructions as machine-readable signals. The term "machine-readable signal" refers to any signal used to provide machine instructions and/or data to the programmable processor.

The system and technology described in the disclosure may be implemented in a computing system that includes backend components (e.g., as a data server), or in a computing system that includes middleware components (e.g., an application server), or in a computing system that includes frontend components (e.g., a user computer with a graphical user interface or web browser, through which a user can interact with the system and technology described herein), or in any combination of such backend components, middleware components, or frontend components. The components of the system can be interconnected via any form or medium of digital data communication (e.g., communication networks). Examples of communication networks include local area networks (LAN), wide area networks (WAN), and the internet.

A computer system may include both a client and a server. The client and server are typically located remotely from each other and usually interact through a communication network. A client-server relationship is established by running computer programs on respective computers that have a client-server relationship with each other.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited in the disclosure.

In addition, it should be understood that various embodiments of the disclosure may be implemented individually or in conjunction with other embodiments as permitted by the solution.

A person of ordinary skill in the art may be aware that units and algorithm steps of the examples described in connection with the embodiments disclosed in the disclosure may be implemented by electronic hardware, or a combination of computer software and electronic hardware. Whether the functions are performed by hardware or software depends on specific applications and design constraint conditions of the technical solutions. Those skilled in the art may use different methods to implement described functions for each specific application, but it should not be considered that the implementation goes beyond the scope of the disclosure.

Those skilled in the art may clearly understand that, for the convenience and brevity of description, for the specific working process of the systems, devices, and units described above reference may be made to corresponding processes in the above method embodiments, and details are not described here again.

The above are merely specific embodiments of the disclosure, but the protection scope of the disclosure is not limited thereto. Any modifications or substitutions readily conceivable by a person skilled in the art within the technical scope disclosed in the disclosure shall fall within the protection scope of the disclosure. Therefore, the protection scope of the disclosure shall be subject to the protection scope of the claims.

## Claims

1. A method for sidelink (SL) communication, performed by a user equipment (UE), comprising:
receiving a direct communication request (DCR), wherein the DCR comprises a destination layer 2 identification (ID) and encrypted information for the SL communication;
determining a security key for decrypting the encrypted information based on the destination layer 2 ID; and
decrypting the encrypted information using the security key for performing the SL communication.

2. The method according to claim 1, wherein determining the security key for decrypting the encrypted information based on the destination layer 2 ID comprises:
determining, based on the destination layer 2 ID, a security context matching the destination layer 2 ID from one or more pre-stored security contexts; and
determining the security key based on the matched security context.

3. The method according to claim 2, wherein each security context comprises: a service code for identifying a service type of the SL communication, a layer 2 ID corresponding to the service code, and a security key associated with the service code.

4. The method according to claim 3, wherein the service code comprises any one of:
a relay service code (RSC);
a proximity based service (ProSe) restricted code;
a ProSe query code;
a ProSe response code; or
a ranging service code.

5. The method according to claim 3 or 4, wherein each security context further comprises any one or more of:
a UE-to-network (U2N) relay layer indicator; or
a control plane security indicator.

6. The method according to any one of claims 2 to 5, further comprising:
creating and storing a security context based on a layer 2 ID, a service code, and a security key which are determined during a discovery procedure.

7. The method according to claim 6, wherein creating and storing the security context comprises any one of:
creating and storing the security context when determining the layer 2 ID for the discovery procedure;
creating and storing the security context after sending a discovery message for the discovery procedure; or
creating and storing the security context after completing the discovery procedure.

8. An apparatus for sidelink (SL) communication, configured in a user equipment (UE), comprising:
a transceiver module, configured to receive a direct communication request (DCR), wherein the DCR comprises a destination layer 2 identification (ID) and encrypted information for the SL communication; and
a processing module, configured to determine a security key for decrypting the encrypted information based on the destination layer 2 ID; and decrypt the encrypted information using the security key for performing the SL communication.

9. The apparatus according to claim 8, wherein the processing module is configured to:
determine, based on the destination layer 2 ID, a security context matching the destination layer 2 ID from one or more pre-stored security contexts; and
determine the security key based on the matched security context.

10. The apparatus according to claim 9, wherein each security context comprises: a service code for identifying a service type of the SL communication, a layer 2 ID corresponding to the service code, and a security key associated with the service code.

11. The apparatus according to claim 10, wherein the service code comprises any one of:
a relay service code (RSC);
a proximity based service (ProSe) restricted code;
a ProSe query code;
a ProSe response code; or
a ranging service code.

12. The apparatus according to claim 10 or 11, wherein each security context further comprises any one or more of:
a UE-to-network (U2N) relay layer indicator; or
a control plane security indicator.

13. The apparatus according to any one of claims 8 to 12, wherein the processing module is further configured to:
create and store a security context based on a layer 2 ID, a service code, and the security key which are determined during a discovery procedure.

14. The apparatus according to claim 13, wherein the processing module is configured to perform any one of:
creating and storing the security context when determining the layer 2 ID for the discovery procedure;
creating and storing the security context after sending a discovery message for the discovery procedure; or
creating and storing the security context after completing the discovery procedure.

15. A communication device, comprising: a transceiver; a memory; a processor connected to both the transceiver and the memory, configured to control wireless signal transmission/reception of the transceiver by executing computer-executable instructions stored in the memory, and enable the method according to any one of claims 1 to 7 to be implemented.

16. A computer storage medium, storing computer-executable instructions thereon, wherein when the computer-executable instructions are executed by a processor, the method of any one of claims 1 to 7 is implemented.
